(19) Europäisches Patentamt
European Patent Office
Office européen des brevets

(11) **EP 3 815 927 B1**

(12) **EUROPEAN PATENT SPECIFICATION**

(45) Date of publication and mention
of the grant of the patent:
**03.07.2024 Bulletin 2024/27**

(21) Application number: **19819224.7**

(22) Date of filing: **24.05.2019**

(51) International Patent Classification (IPC):
**B60C 11/03** (2006.01)   **B60C 11/12** (2006.01)
**B60C 11/13** (2006.01)

(52) Cooperative Patent Classification (CPC):
**B60C 11/0302; B60C 11/0306; B60C 11/1307;
B60C 11/1376; B60C 11/1392;** B60C 2011/1209;
B60C 2011/1338

(86) International application number:
**PCT/JP2019/020596**

(87) International publication number:
**WO 2019/239844 (19.12.2019 Gazette 2019/51)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.06.2018 JP 2018110894**

(43) Date of publication of application:
**05.05.2021 Bulletin 2021/18**

(73) Proprietor: **Bridgestone Corporation
Chuo-Ku
Tokyo 104-8340 (JP)**

(72) Inventor: **AKASHI, Tokumasa
Tokyo
104-8340 (JP)**

(74) Representative: **Marks & Clerk LLP
15 Fetter Lane
London EC4A 1BW (GB)**

(56) References cited:
WO-A1-2011/036540    WO-A1-2017/104780
JP-A- H0 880 713    JP-A- H05 238 209
JP-A- H05 310 011    JP-A- 2000 190 711
JP-A- 2007 030 547    JP-A- 2009 184 414
JP-A- 2009 262 647    JP-A- 2015 054 594
JP-A- 2015 151 087    JP-A- 2017 030 513
JP-A- 2018 187 975    US-A1- 2007 240 801
US-A1- 2009 188 596

EP 3 815 927 B1

## Description

### TECHNICAL FIELD

The present invention relates to pneumatic tires.

### BACKGROUND ART

It has been known to provide sipes on blocks formed on a tread surface of a tire (Patent Literature 1). Attention is also drawn to the disclosure of WO2011/036540A1. When the sipes are provided on the blocks as in the tire disclosed in Patent Literature 1, an edge of the sipes scratches a road surface, thereby increasing a grip force and improving a performance on an ice road (so-called edge effect).

When the tire is braked on the ice road, water is generated by a friction and the generated water enters the tread surface, so that a braking performance may be deteriorated. The sipes also have an effect of draining such water.

### CITATION LIST

### PATENT LITERATURE

[Patent Document 1] Japanese Patent Application Publication No. 2015-116935

### SUMMARY OF INVENTION

### TECHNICAL PROBLEM

However, the water drained by the sipes of a front block flows to a rear block. In this case, in the rear block, it is necessary to drain both the water flowing from the front block and the water generated by the friction. However if a drainage is not performed smoothly, there is a possibility that the braking performance on the ice road is deteriorated. Therefore, it is necessary to control the water flowing from the front block. However the invention disclosed in Patent Literature 1 does not describe this point.

In view of the foregoing problem, the present invention provides a pneumatic tire that can control the water flow flowing from the front block and improves the braking performance on the ice road.

### SOLUTION TO PROBLEM

A pneumatic tire according to an aspect of the present invention is provided as claimed in claim 1.

### ADVANTAGEOUS EFFECTS OF INVENTION

According to the present invention, the water flow drained by the sipes of the front block is controlled, and the braking performance on the ice road can be improved.

### BRIEF DESCRIPTION OF DRAWINGS

[Fig. 1] Fig. 1 is a plan view showing a tread surface of a tire according to an example, which is not according to the present invention, but is useful for understanding the present invention.
[Fig. 2A] Fig. 2A illustrates a block according to an example, which is not according to the present invention, but is useful for understanding the present invention.
[Fig. 2B] Fig. 2B illustrates a block according to an example, which is not according to the present invention, but is useful for understanding the present invention.
[Fig. 3] Fig. 3 illustrates a block according to an example, which is not according to the present invention, but is useful for understanding the present invention.
[Fig. 4] Fig. 4 illustrates a block without a projection.
[Fig. 5] Figure 5 illustrates a mechanism of water flow.
[Fig. 6A] Fig. 6A illustrates another example of a block according to an example, which is not according to the present invention, but is useful for understanding the present invention.
[Fig. 6B] Fig. 6B illustrates another example of a block according to an example, which is not according to the present invention, but is useful for understanding the present invention.
[Fig. 7A] Fig. 7A illustrates an example of a block according to an embodiment of the present invention.
[Fig. 7B] Fig. 7B illustrates another example of a block according to an embodiment of the present invention.
[Fig. 7C] Fig. 7C illustrates another example of a block according to an embodiment of the present invention.
[Fig. 7D] Fig. 7D illustrates another example of a block according to an embodiment of the present invention.
[Fig. 7E] Fig. 7E illustrates another example of a block according to an embodiment of the present invention.
[Fig. 8A] Fig. 8A illustrates another example of a block according to example, which is not according to the present invention, but is useful for understanding the present invention.
[Fig. 8B] Fig. 8B illustrates another example of a block according to an example, which is not according to the present invention, but is useful for understanding the present invention.
[Fig. 8C] Fig. 8C illustrates another example of a block according to an example, which is not according to the present invention, but is useful for understanding the present invention.

[Fig. 8D] Fig. 8D illustrates another example of a block according to an example, which is not according to the present invention, but is useful for understanding the present invention.

[Fig. 9A] Fig. 9A illustrates another example of a block according to an example, which is not according to the present invention, but is useful for understanding the present invention.

[Fig. 9B] Fig. 9B illustrates another example of a block according to an example, which is not according to the present invention, but is useful for understanding the present invention.

[Fig. 9C] Fig. 9C illustrates another example of a block according to an example, which is not according to the present invention, but is useful for understanding the present invention.

[Fig. 9D] Fig. 9D illustrates another example of a block according to an example, which is not according to the present invention, but is useful for understanding the present invention.

[Fig. 9E] Fig. 9E illustrates another example of a block according to an example, which is not according to the present invention, but is useful for understanding the present invention.

[Fig. 10] Fig. 10 is a plan view showing another tread surface of a tire according to an embodiment of the present invention.

[Fig. 11] Fig. 11 is a plan view showing further another tread surface of a tire according to an example, which is not according to the present invention, but is useful for understanding the present invention.

DESCRIPTION OF EMBODIMENTS

Hereinafter, embodiments of the present invention and examples will be described with reference to the drawings. In the illustration of the drawings, the same constituents are denoted by the same reference signs, and description thereof is omitted.

(Pneumatic tire configuration)

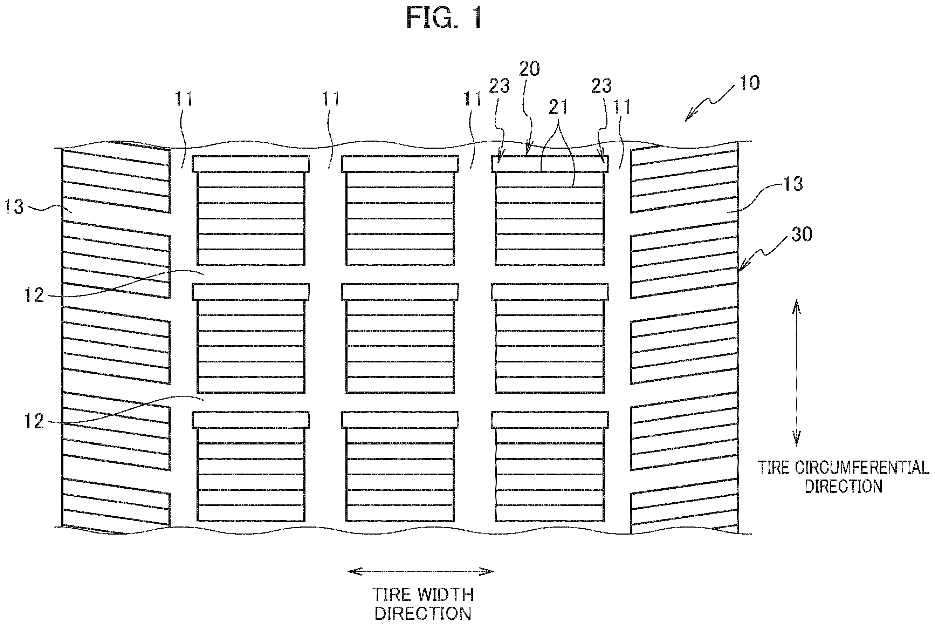

The configuration of a pneumatic tire 10 will be described with reference to Fig. 1. The pneumatic tire 10 is hereinafter simply referred to as a tire 10. On a tread surface of the tire 10, a plurality of circumferential grooves 11 extending along the tire circumferential direction and a plurality of lateral grooves 12 crossing the circumferential grooves 11 are formed. On the tread surface of the tire 10, a plurality of blocks 20 partitioned by the circumferential grooves 11 and the lateral grooves 12 are formed. The blocks 20 are continuously formed along the tire circumferential direction. The lateral groove 12 extends along the tire width direction. At both end parts of the tire 10, a plurality of shoulder blocks 30 partitioned by a circumferential grooves 11 and shoulder grooves 13 is formed. It is sufficient that at least one row of the blocks 20 along the tire circumferential direction is formed. In the present example, the tire circumferential direction is a direction in which the tire rotates around a tire rotation axis. The tire width direction is a direction parallel to the tire rotation axis. An inside in the tire width direction is a direction toward a tire equator surface in the tire width direction, and an outside in the tire width direction is a direction opposite to the direction toward the tire equator surface in the tire width direction. A tire radial direction is a direction orthogonal to the tire rotation axis. An inside in the tire radial direction is a direction toward the tire rotation axis in the tire radial direction, and an outside in the tire radial direction is a direction away from the tire rotation axis in the tire radial direction.

A plurality of sipes 21 are formed on a tread part of the block 20. In Fig. 1, the sipes 21 is formed linearly along the tire width direction, but is not limited to this case. The sipes 21 may be formed in a zigzag shape, a waveform shape, a crank shape or the like along the tire width direction. The sipes 21 is a narrow groove which can be closed when the tire 10 is grounded. The groove width of the sipes 21 is, but not necessarily, for example, 0.1 mm to 1.5 mm.

As shown in Fig. 1, at one end portion of the block 20 in the tire circumferential direction, a projection 23 is formed. One end portion of the block 20 in the tire circumferential direction is a portion that first contacts the road surface when the tire 10 rotates, and is a so-called stepping end of the block 20.

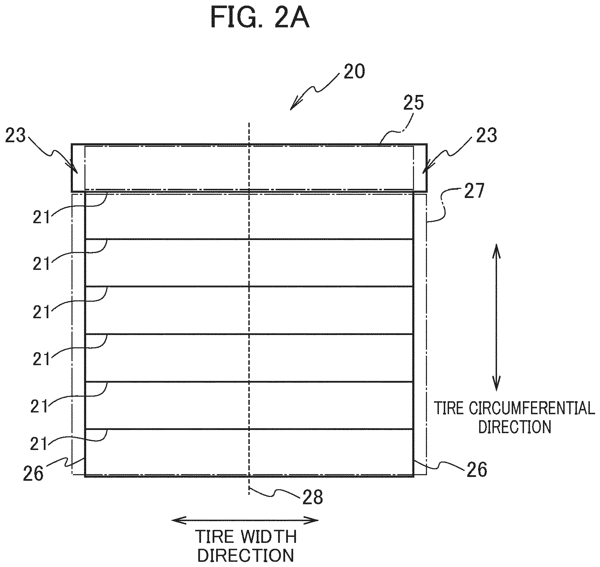

Next, details of the projection 23 will be described with reference to Fig. 2A. As shown in Fig. 2A, the projection 23 is formed at an end portion 25 of the block 20. As described above, the end portion 25 is a portion that first contacts the road surface when the tire 10 rotates, and is the stepping end of the block 20. A center line 28 shown in Fig. 2A is a center line of the block 20 in the tire width direction.

The projection 23 is formed so as to project along the tire width direction at the end portion 25. A side wall 26, which is an end of the block 20 in the tire width direction, is formed along the tire circumferential direction and continues to the projection 23. The projection 23 and the side wall 26 form a recess. Other parts of the block 20 excluding the projection 23 is formed within a range of shadow formed by projecting the end portion 25 in the tire circumferential direction. In other words, the block 20 is formed between a line formed by extending the outermost end of the projection 23 in the tire width direction along the tire circumferential direction. Furthermore in other words, the side wall 26 is formed closer to the center line 28 of the block 20 in the tire width direction than the line formed by extending the outermost end of the projection 23 in the tire width direction along the tire circumferential direction. The range of shadow formed by projecting the end portion 25 in the tire circumferential direction is an area 27 shown in Fig. 2A.

It has been described that the projection 23 is formed at the end portion 25 which is the stepping end, but is not limited to this case. The projection 23 may be formed at opposite the end portion 25, i.e., at a kick-out end. That is, the projection 23 may be formed at the ends on both sides of the block 20 in the tire circumferential direction.

In the example shown in Fig. 2A, the projection 23 are formed on both sides of the end portion 25 along the tire width direction, but they are not necessarily formed on both sides of the end portion 25. As described later, the projection 23 may be formed only on one side of the end portion 25.

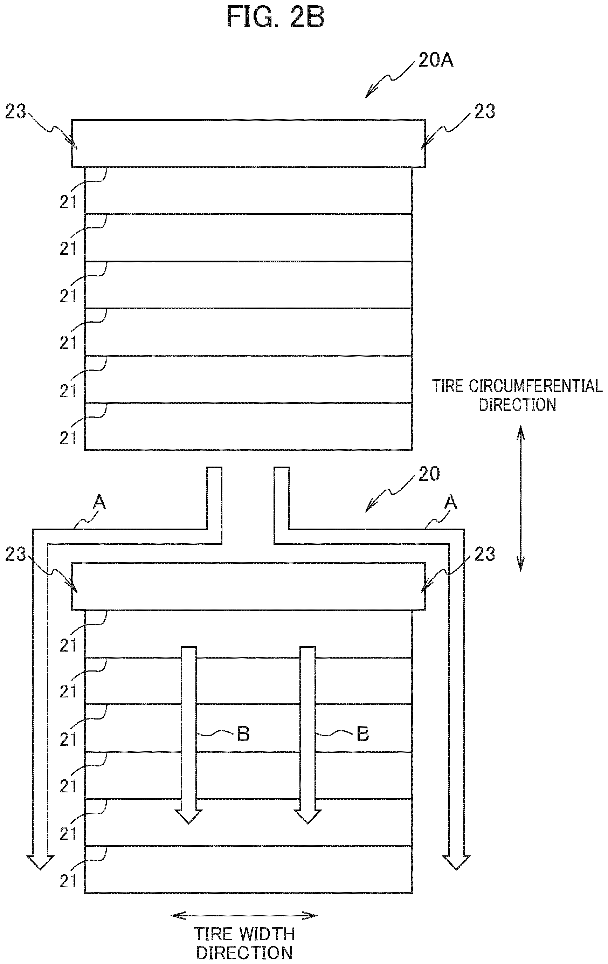

Next, with reference to Fig. 2B, the water flow by the projection 23 will be described. As an example, when the block 20A in front of the block 20 touches the ice road, water is generated by friction. In this case, the water generated by the friction of the front block 20A is drained by the sipes 21 formed in the front block 20A. Water drained by the sipes 21 of the front block 20A flows through the outside of the projection 23 to the rear of the block 20 as shown by an arrow A. In other words, the projection 23 prevents the water drained by the sipes 21 of the front block 20A from entering the sipes 21 of the block 20. Thus, the water flow drained by the sipes 21 of the front block 20A is controlled, and the braking performance on the ice road can be improved. When the block 20 touches the ice road, water generated by friction is drained by the sipes 21 as shown by an arrow B, therefore the deterioration of the braking performance is suppressed. That is, in the whole block 20, water drained from the front block 20A is prevented from entering the sipes 21 by the projection 23, and water generated by friction is drained by the sipes 21. Thus, the braking performance on the ice road can be improved throughout the block 20.

(Working and Effects)

As discussed above, the tire 10 according to the example obtains the following working and effects. The projection 23 is formed at the end portion 25 of the block 20 on the tire 10. The side wall 26 continuous to the projection 23 is formed closer to the center line 28 of the block 20 with respect to the tire width direction than the line formed by extending the outermost end of the projection 23 in the tire width direction along the tire circumferential direction. The projection 23 prevents water drained by the sipe of the front block from entering the sipes 21 of the block 20. Thus, the water flow drained by the sipe of the front block is controlled, and the braking performance on the ice road can be improved.

(Other embodiments)

While the present invention has been described above by reference to the example, it should be understood that the present invention is not intended to be limited to the descriptions and the drawings .

Various alternative embodiments, examples, and technical applications will be apparent to those skilled in the art without departing from the scope of the invention as defined in the claims.

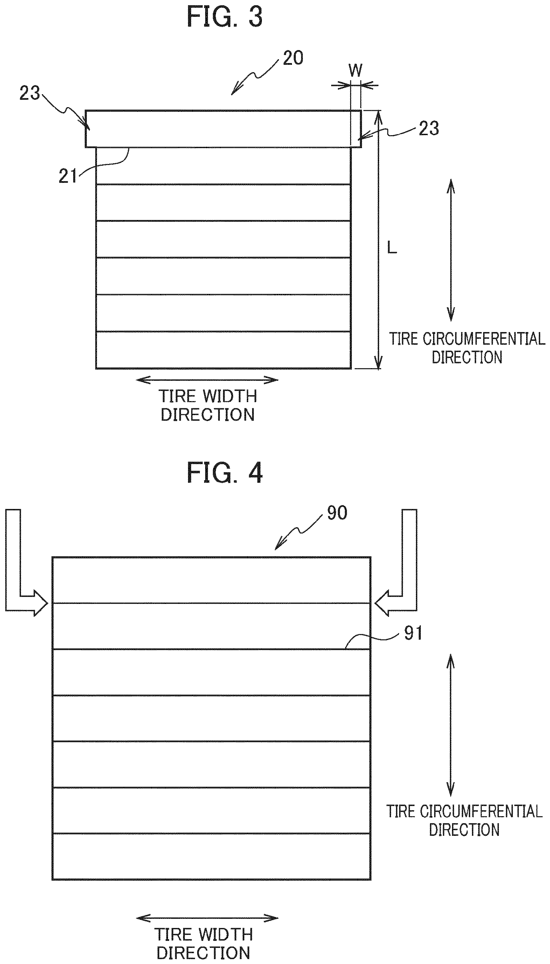

As shown in Fig. 3, when the length of the projection 23 in the tire width direction is W and the length of the block 20 in the tire circumferential direction is L, the length W of the projection 23 in the tire width direction is a length satisfying the following formula 1.
[Math. 1]

$$0 < W/L < 2/30 \qquad (1)$$

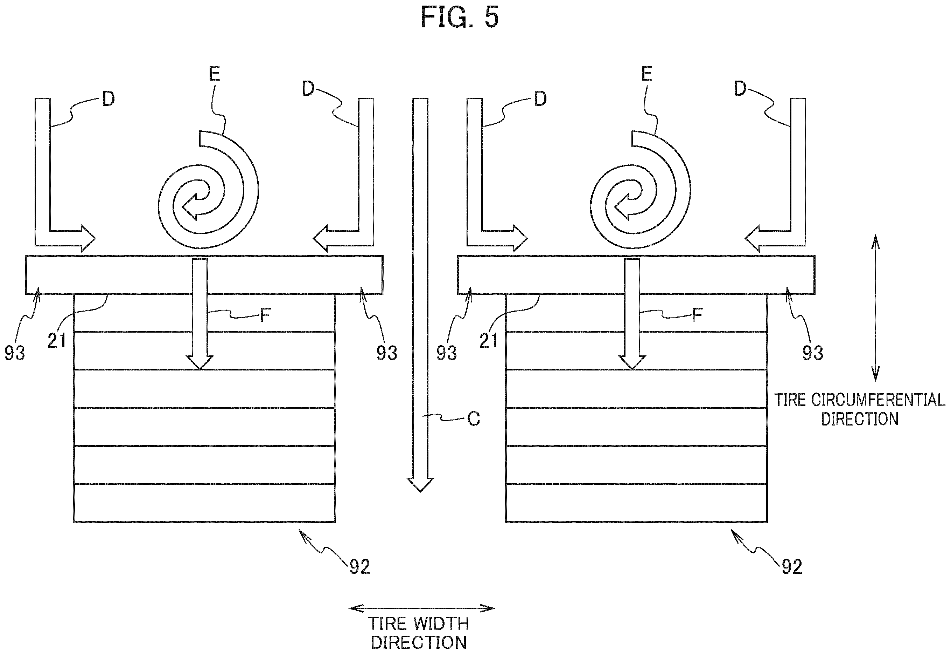

The formula 1 will be described. If the length W is 0, as shown in Fig. 4, water drained from the front block enters the interior of the block 90 through the sipes 91. This is due to the viscosity of water. The length W must be greater than 0 to prevent water intrusion. However, when W/L is 2/30 or more, the braking performance on the ice road may be deteriorated as compared with the case where W/L is less than 2/30. This point will be described with reference to Fig. 5. In Fig. 5, the block 92 shows two adjacent blocks. In Fig. 5, W/L is 2/30 or more. As shown in Fig. 5, since the projection 23 is long, water flows in the tire width direction as shown by an arrow D. Therefore, the amount of water flowing to the rear of the block 92 decreases as shown by an arrow C. Since water flows from both directions (lateral direction) toward the center as shown by the arrow D, a turbulence is generated as shown by an arrow E, and smooth water flow is obstructed. Also, as shown by an arrow F, some of water in the area of the arrow E may flow to the tread of block 92. As a result, the braking performance on the ice road may be deteriorated. When the projection 23 is long, the projection 23 is liable to be partially worn. When the projection 23 is long, the projection 23 is likely to crack. As described above, when the W/L is 2/30 or more, the braking performance on the ice road may be deteriorated as compared with the case where W/L is less than 2/30, and this is disadvantageous in terms of partially worn and crack. On the other hand, W/L satisfies the above formula 1, the braking performance on the ice road can be improved, and partially worn and crack can be suppressed. The length W of the projection 23 in the tire width direction may be 1 mm or 2 mm.

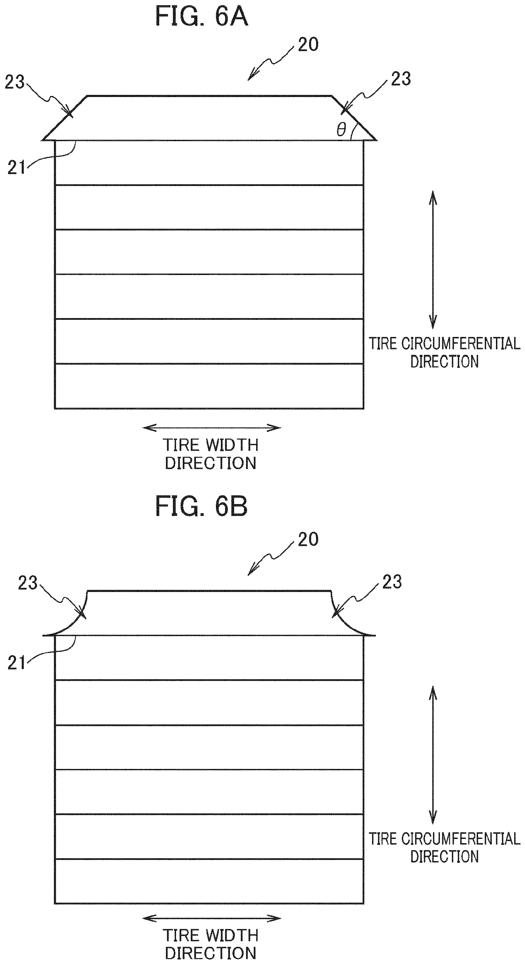

The shape of the projection 23 may be a square or a convex shape toward the outside in the tire width direction. As shown in Fig. 6A, the shape of the projection 23 may be inclined linearly toward the outside in the tire width direction. Further, as shown in Fig. 6B, the shape of the projection 23 may be convex toward the inside in the tire width direction. The angle θ (Fig. 6A) of the projection 23 with respect to the tire circumferential direction is preferably 45 degrees or more in any shape.

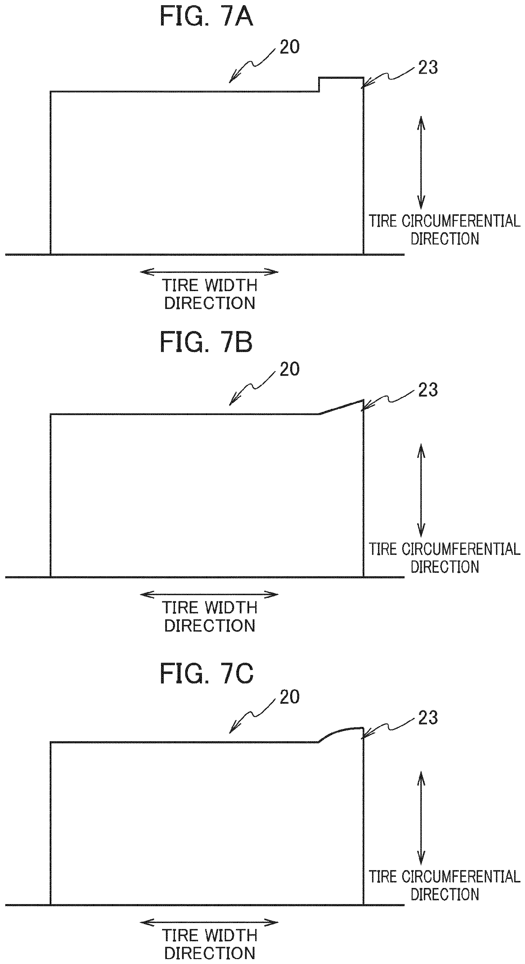

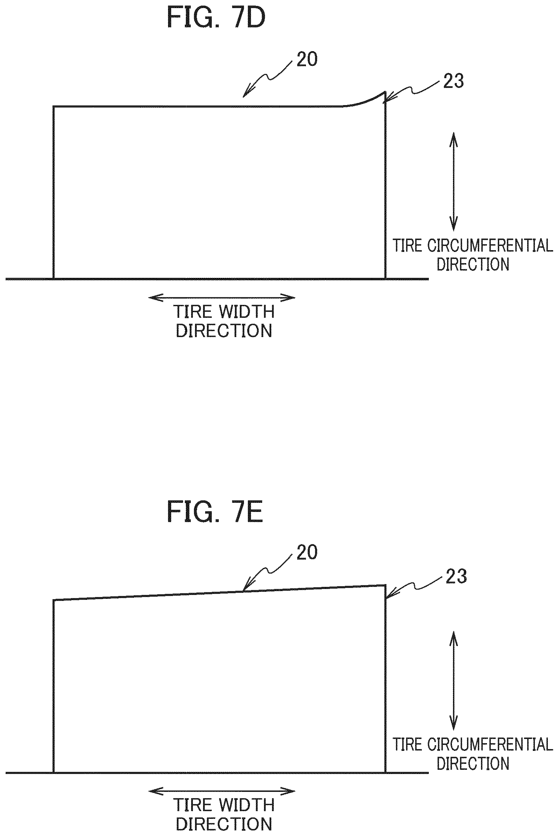

The height of the projection 23 in the tire radial direction can be appropriately changed. For example, as shown in Fig. 7A, the height of the projection 23 in the tire radial direction may be higher than the height of other portions of the block 20. Further, the shape of the projection 23 in the tire radial direction is not limited to the square shape as shown in Fig. 7A. For example, as shown in Fig. 7B, the shape of the projection 23 in the tire radial direction may be inclined in a straight line from the kick-out side to the stepping side. The shape of the projection 23 in the tire radial direction may be convex toward the kick-out side as shown in Fig. 7C, Further, as shown in Fig. 7D, the shape of the projection 23 in the tire radial direction may be convex toward the stepping side. As shown in Fig. 7E, the block 20 may be formed so that the height in the tire radial direction gradually increases from the kick-out end to the stepping end.

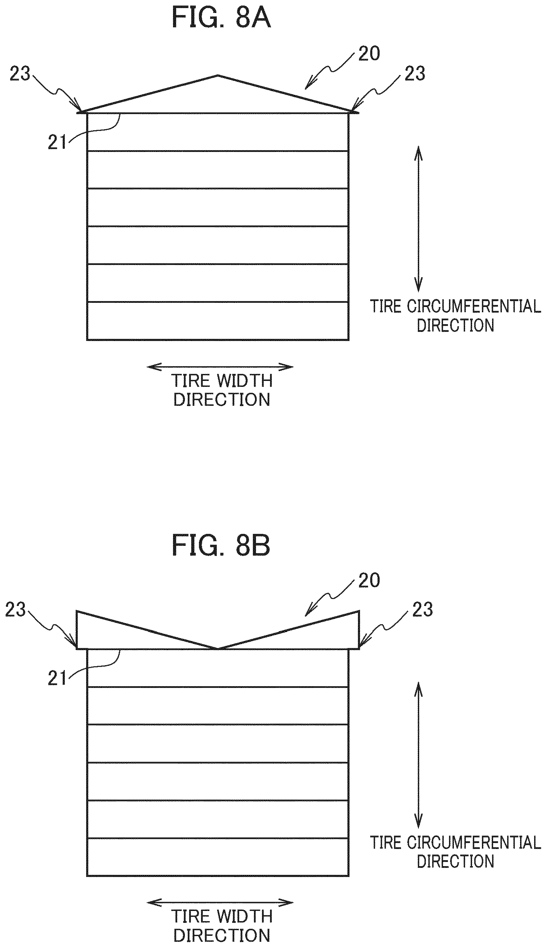

In the example shown in Fig. 2A, the shape of the end portion 25 is linear, but is not limited to this case. For example, as shown in Fig. 8A, the end portion 25 may be inclined from the center in the tire width direction of the block 20 toward the outside in the tire width direction. Further, the end portion 25 may be inclined from the stepping side to the kick-out side as shown in Fig. 8A. The end portion 25 may be inclined from the kick-out side to the stepping side as shown in Fig. 8B. In the example shown in Fig. 8B, some of water drained by the sipes of the front block is stopped by the recess at the end portion 25, thereby the amount of water flowing into the sipes 21 is further reduced.

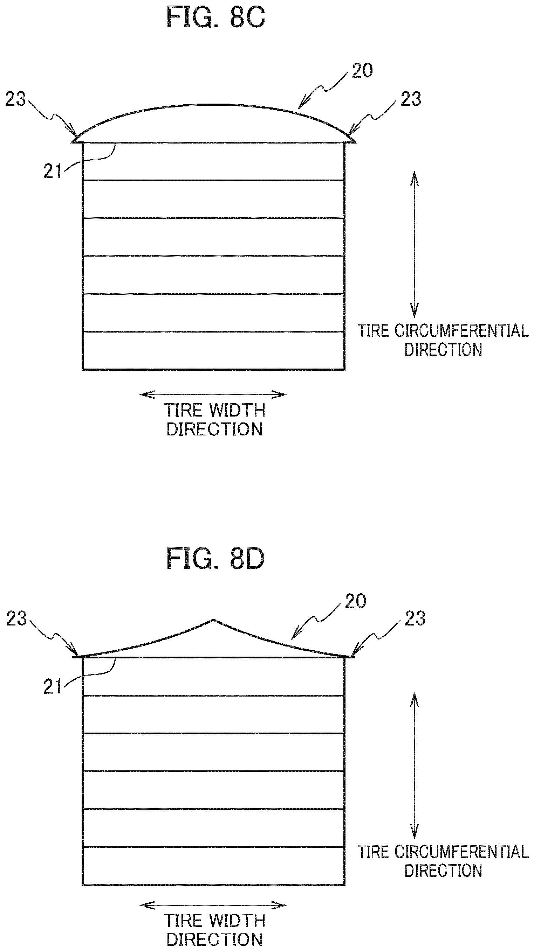

Further, as shown in Fig. 8C, the shape of the end portion 25 may be convex toward the stepping side. Further, as shown in Fig. 8D, the shape of the end portion 25 may be convex toward the kick-out side with the center in the tire width direction of the block 20 as the apex.

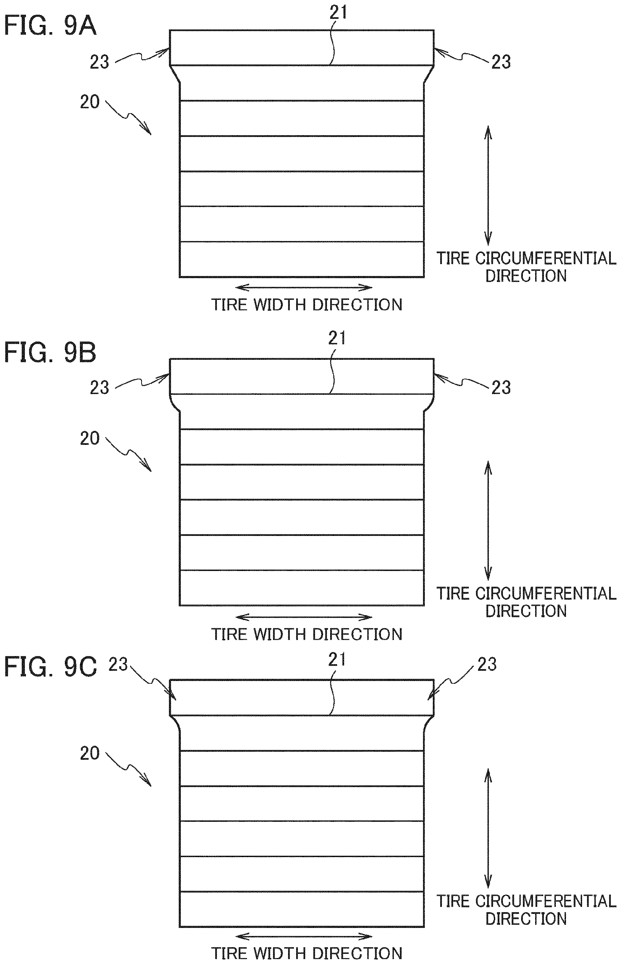

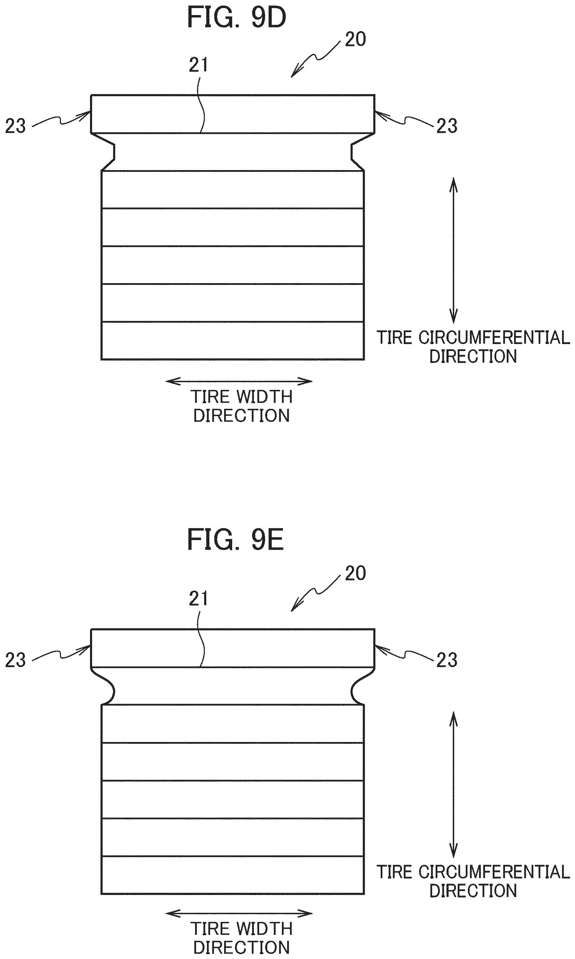

In the example shown in Fig. 2A, the shape of the side wall 26 continuous to the projection 23 is linear along the tire circumferential direction, but the shape is not limited to this case. For example, as shown in Fig. 9A, a part of the side wall 26 continuous to the projection 23 may be inclined inward in the tire width direction. Further, as shown in Fig. 9B, the shape of a part of the side wall 26 continuous to the projection 23 may be a convex shape toward the outside in the tire width direction. Further, as shown in Fig. 9C, the shape of a part of the side wall 26 continuous to the projection 23 may be convex inward in the tire width direction. Further, as shown in Fig. 9D, the shape of a part of the side wall 26 continuous to the projection 23 may be a convex shape formed linearly toward the inside in the tire width direction so as to enter the inside of the block 20. Further, as shown in Fig. 9E, the shape of a part of the side wall 26 continuous to the projection 23 may be a convex shape formed as a curve toward the inside in the tire width direction so as to enter the inside of the block 20.

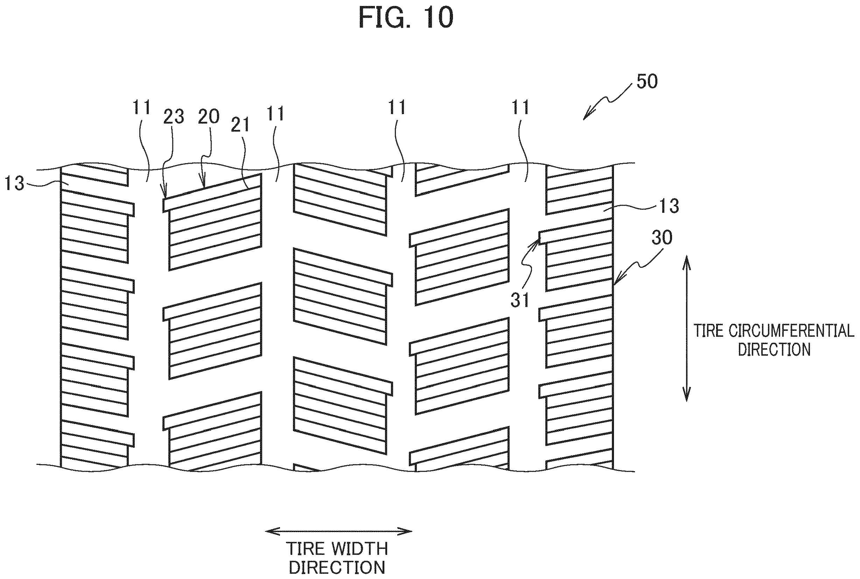

As shown in Fig. 10, the block 20 of the tire 50 may be formed to be inclined in the tire width direction. Water has the property of flowing in a flowable direction. Therefore, as shown in Fig. 10, when the block 20 is formed to be inclined, most of water drained by the sipes of the front block flows along the inclined direction of the block 20. Therefore, as shown in Fig. 10, the projection 23 may be formed so as to protrude only on one side of the end portion. Thus, even if the projection 23 is formed only on one side of the end portion, the water flow drained by the sipes of the front block is controlled, and the braking performance on the ice road can be improved. Even when the projection 23 is formed only on one side of the end portion 25, the side wall 26 continuous to the projection 23 is formed closer to the center line 28 with respect to the tire width direction of the block 20 than the line extending the outermost end of the projection 23 in the tire width direction along the tire circumferential direction. In other words, the block 20 may be formed between the line formed by extending the outermost end of the projection 23 in the tire width direction along the tire circumferential direction and the line formed by extending the outer end in the tire width direction of the end portion 25 where the projection 23 is not formed along the tire circumferential direction.

As shown in Fig. 10, the projection 31 may be formed on the shoulder block 30. The projection 23 may be formed in all the blocks 20 or in some of the blocks 20. Similarly, the projection 31 may be formed in all the shoulder blocks 30 or in some of the shoulder blocks 30.

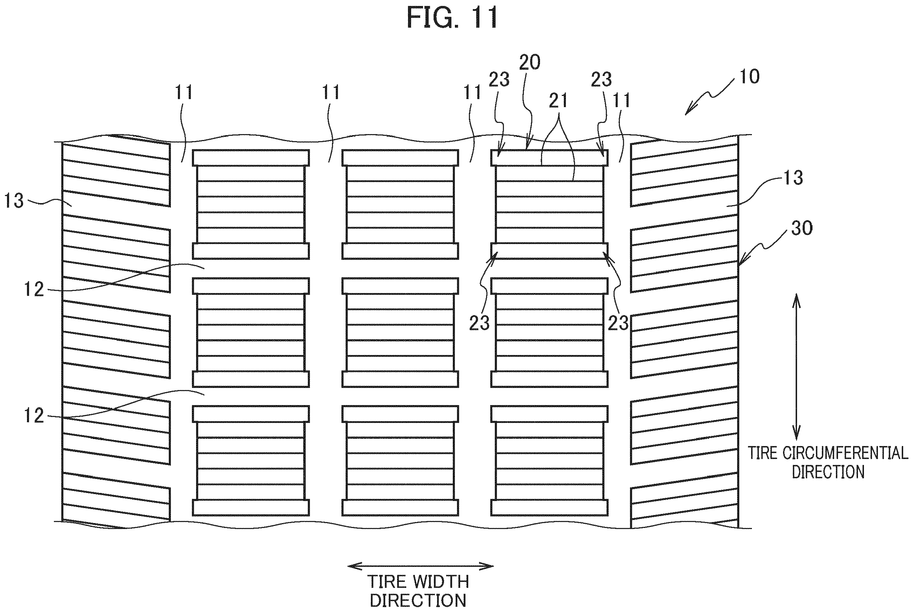

The projection 23 may be formed not only at the stepping end but also at the kick-out end. That is, as shown in Fig. 11, the projection 23 may be formed at both ends of the block 20 in the tire circumferential direction. Thus, the above braking performance is obtained regardless of the rotational direction of the tire. In Fig. 2A, the end of the projection 23 on the kick-out side overlaps the sipes 21, but is not limited to this case. The sipes 21 may be formed on the kick-out side rather than the end of the projection 23.

REFERENCE SIGNSLIST

    10, 50 tire
    11 circumferential groove
    12 lateral groove
    13 shoulder groove
    20 block
    21 sipe
    23 projection
    25 end portion
    26 side wall
    27 area
    28 center line
    30 shoulder block
    31 projection

**Claims**

1.   A pneumatic tire (50) comprising:

at least two circumferential grooves (11) extending along a tire circumferential direction;

a plurality of lateral grooves (13) formed in a direction crossing the circumferential grooves (11);

a plurality of blocks (20, 30) partitioned by the circumferential grooves (11) and the lateral grooves (13);

a sipe (21) formed on the blocks (20, 30) along a tire width direction,

wherein

a projection (23, 31) is formed at at least one end portion of the blocks (20, 30) in the tire circumferential direction, the projection (23, 31) projects along the tire width direction,

a side wall of the blocks (20, 30), which is an end of the blocks (20, 30) in the tire width direction, is formed along the tire circumferential direction and is continuous to the projection (23, 31), is formed closer to a center line of the blocks (20, 30) in the tire width direction than a line formed by extending an outermost end of the projection (23, 31) in the tire width direction along the tire circumferential direction,

**characterized in that**

in each block (20, 30), the block (20, 30) and the end portion in the tire circumferential direction of the projection (23, 31) are formed to be inclined in the tire width direction,

the blocks (20, 30) comprise shoulder blocks (30) formed at a tire end portion in the tire width direction and blocks (20) other than the shoulder blocks (30), and

the projection (31) formed on the shoulder blocks (30) and the projection (23) formed on the blocks (20) other than the shoulder blocks (30) are formed to protrude only on one side of the end portion of the block (20, 30).

2. The pneumatic tire (10) according to claim 1, wherein the projection (23) and the side wall (26) form a recess.

3. The pneumatic tire (10) according to claim 1 or 2, wherein the projection (23, 31) is formed at only one end portion of the blocks (20, 30).

**Patentansprüche**

1. Luftreifen (50), der Folgendes umfasst:

mindestens zwei umlaufende Rillen (11), die sich entlang einer Reifenumfangsrichtung erstrecken;

eine Vielzahl von seitlichen Rillen (13), die in einer Richtung geformt sind, welche die umlaufenden Rillen (11) kreuzt;

eine Vielzahl von Blöcken (20, 30), die durch die umlaufenden Rillen (11) und die seitlichen Rillen (13) unterteilt sind;

eine Lamelle (21), die auf den Blöcken (20, 30) entlang einer Reifenbreitenrichtung geformt ist, wobei

ein Vorsprung (23, 31) an mindestens einem Endabschnitt der Blöcke (20, 30) in der Reifenumfangsrichtung geformt ist, der Vorsprung (23, 31) entlang der Reifenbreitenrichtung vorspringt,

eine Seitenwand der Blöcke (20, 30), die ein Ende der Blöcke (20, 30) in der Reifenbreitenrichtung ist, entlang der Reifenumfangsrichtung geformt ist und mit dem Vorsprung (23, 31) zusammenhängend ist, näher zu einer Mittellinie der Blöcke (20, 30) in der Reifenbreitenrichtung geformt ist als eine Linie, die durch Verlängern eines äußersten Endes des Vorsprungs (23, 31) in der Reifenbreitenrichtung entlang der Reifenumfangsrichtung geformt ist,

**dadurch gekennzeichnet, dass**

in jedem Block (20, 30) der Block (20, 30) und der Endabschnitt in der Reifenumfangsrichtung des Vorsprungs (23, 31) so geformt sind, dass sie in der Reifenbreitenrichtung geneigt sind, die Blöcke (20, 30) Schulterblöcke (30), die an einem Reifenendabschnitt in der Reifenbreitenrichtung geformt sind, und andere Blöcke (20) als die Schulterblöcke (30) umfassen, und der Vorsprung (31), der an den Schulterblöcken (30) geformt ist, und der Vorsprung (23), der an den anderen Blöcken (20) als den Schulterblöcken (30) geformt ist, so geformt sind, dass sie nur auf einer Seite des Endabschnitts des Blocks (20, 30) vorspringen.

2. Luftreifen (10) nach Anspruch 1, wobei der Vorsprung (23) und die Seitenwand (26) eine Aussparung formen.

3. Luftreifen (10) nach Anspruch 1 oder 2, wobei der Vorsprung (23, 31) an nur einem Endabschnitt der Blöcke (20, 30) geformt ist.

**Revendications**

1. Bandage pneumatique (50), comprenant :

au moins deux rainures circonférentielles (11) s'étendant le long d'une direction circonférentielle du pneumatique ;

une pluralité de rainures latérales (13) formées dans une direction croisant les rainures circonférentielles (11) ;

une pluralité de pavés (20, 30) séparés par les rainures circonférentielles (11) et les rainures latérales (13) ;
une lamelle (21) formée sur les pavés (20, 30) le long d'une direction de la largeur du pneumatique ;
dans lequel
une saillie (23, 31) est formée au niveau d'au moins une partie d'extrémité des pavés (20, 30) dans la direction circonférentielle du pneumatique, la saillie (23, 31) fait saillie le long de la direction de la largeur du pneumatique,
une paroi latérale des pavés (20, 30), qui est une extrémité des pavés (20, 30) dans la direction de la largeur du pneumatique, est formée le long de la direction circonférentielle du pneumatique et est continue par rapport à la saillie (23, 31), est formée plus près d'une ligne médiane des pavés (20, 30) dans la direction de la largeur du pneumatique, qu'une ligne formée en étendant une extrémité externe extrême de la saillie (23, 31) dans la direction de la largeur du pneumatique le long de la direction circonférentielle du pneumatique,
**caractérisé en ce que**
dans chaque pavé (20, 30), le pavé (20, 30) et la partie d'extrémité dans la direction circonférentielle du pneumatique de la saillie (23, 31) sont formés de sorte à être inclinés dans la direction de la largeur du pneumatique,
les pavés (20, 30) comprennent des pavés d'épaulement (30) formés au niveau d'une partie d'extrémité de pneumatique, dans la direction de la largeur du pneumatique, et des pavés (20) autres que les pavés d'épaulement (30), et la saillie (31) formée sur les pavés d'épaulement (30) et la saillie (23) formée sur les pavés (20) autres que les pavés d'épaulement (30) sont formées de sorte à faire saillie uniquement sur un côté de la partie d'extrémité du pavé (20, 30).

2. Bandage pneumatique (10) selon la revendication 1, dans lequel la saillie (23) et la paroi latérale (26) forment un évidement.

3. Bandage pneumatique (10) selon la revendication 1 ou 2, dans lequel la saillie (23, 31) est formée uniquement au niveau d'une partie d'extrémité des pavés (20, 30).

FIG. 1

# FIG. 2A

TIRE CIRCUMFERENTIAL
DIRECTION

TIRE WIDTH
DIRECTION

# FIG. 2B

# FIG. 3

TIRE CIRCUMFERENTIAL
DIRECTION

TIRE WIDTH
DIRECTION

# FIG. 4

TIRE CIRCUMFERENTIAL
DIRECTION

TIRE WIDTH
DIRECTION

# FIG. 5

## FIG. 6A

TIRE CIRCUMFERENTIAL
DIRECTION

TIRE WIDTH
DIRECTION

## FIG. 6B

TIRE CIRCUMFERENTIAL
DIRECTION

TIRE WIDTH
DIRECTION

# FIG. 7A

20

23

TIRE CIRCUMFERENTIAL
DIRECTION

TIRE WIDTH
DIRECTION

# FIG. 7B

20

23

TIRE CIRCUMFERENTIAL
DIRECTION

TIRE WIDTH
DIRECTION

# FIG. 7C

20

23

TIRE CIRCUMFERENTIAL
DIRECTION

TIRE WIDTH
DIRECTION

## FIG. 7D

20

23

TIRE CIRCUMFERENTIAL
DIRECTION

TIRE WIDTH
DIRECTION

## FIG. 7E

20

23

TIRE CIRCUMFERENTIAL
DIRECTION

TIRE WIDTH
DIRECTION

# FIG. 8A

TIRE CIRCUMFERENTIAL
DIRECTION

TIRE WIDTH
DIRECTION

# FIG. 8B

TIRE CIRCUMFERENTIAL
DIRECTION

TIRE WIDTH
DIRECTION

# FIG. 8C

TIRE CIRCUMFERENTIAL
DIRECTION

TIRE WIDTH
DIRECTION

# FIG. 8D

TIRE CIRCUMFERENTIAL
DIRECTION

TIRE WIDTH
DIRECTION

FIG. 9A

23 — 20 — 21 — 23

TIRE CIRCUMFERENTIAL
DIRECTION

TIRE WIDTH DIRECTION

FIG. 9B

23 — 20 — 21 — 23

TIRE CIRCUMFERENTIAL
DIRECTION

TIRE WIDTH DIRECTION

FIG. 9C

23 — 20 — 21 — 23

TIRE CIRCUMFERENTIAL
DIRECTION

TIRE WIDTH DIRECTION

# FIG. 9D

# FIG. 9E

FIG. 10

# FIG. 11

TIRE CIRCUMFERENTIAL
DIRECTION

TIRE WIDTH
DIRECTION

**EP 3 815 927 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011036540 A1

- JP 2015116935 A